# FASCICULE DE BREVET EUROPEEN

(11) **EP 0 679 565 B1**
(45) Date de publication et mention de la délivrance du brevet: **14.01.1998**
(21) Numéro de dépôt: 95400909.8
(22) Date de dépôt: 24.04.1995
(51) Int. Cl.: B62D 25/08

(54) **Face avant technique de véhicule automobile**
Vorderfront eines Kraftfahrzeuges
Front end of an automobile

(30) Priorité: 25.04.1994 FR 9404954
(43) Date de publication de la demande: 02.11.1995
(73) Titulaire: COMPAGNIE PLASTIC OMNIUM, 69007 Lyon (FR)
(72) Inventeur: Girardot, Ludovic, F-52200 Langres (FR); Poisat, Michel, F-52200 Langres (FR)
(74) Mandataire: Nony, Michel

(56) Documents cités:
- DE-A- 3 247 989
- DE-A- 3 433 935
- DE-U- 7 408 125
- FR-A- 2 494 185

## Description

La présente invention concerne une face avant technique de véhicule automobile.

Une face avant technique de véhicule automobile est une pièce qui est destinée à être installée à l'avant du véhicule, en général directement sur son châssis, pour supporter à la fois les optiques de phares, le système d'accrochage de sécurité du capot, éventuellement la calandre, ainsi que d'autres organes du véhicule tels qu'un radiateur ou un ventilateur.

Ces fonctions requièrent que la face avant technique présente une bonne rigidité d'ensemble, et soit particulièrement résistante dans sa région reliant le point d'accrochage du capot au châssis du véhicule.

En effet, la fonction d'accrochage du capot constituant un élément important de la sécurité du véhicule, il est primordial que la face avant technique offre une résistance optimale à tout effort d'arrachement du capot.

Or, du fait de la présence du radiateur à l'avant du moteur de la plupart des véhicules automobiles, toute face avant technique doit laisser libre un passage central correspondant aux dimensions du radiateur, de sorte que le point d'accrochage du capot, qui est également dans la zone centrale, se situe au-dessus de l'évidement de la face avant technique.

De ce fait, la région de la face avant technique reliant le point d'accrochage du capot au châssis du véhicule n'est pas rectiligne mais suit le contour du passage central. Par conséquent, en cas d'arrachement du capot, elle subit non seulement des efforts de traction mais également d'importants efforts de flexion.

On connaît déjà des faces avant techniques constituées par assemblage de pièces en tôle rivetées, vissées ou soudées entre elles.

Cependant, ces faces avant techniques en tôle présentent les inconvénients d'être coûteuses en raison notamment du nombre d'opérations qui sont nécessaires pour l'assemblage et la fixation des pièces entre elles, et de présenter un poids important.

Pour remédier à ces inconvénients, on a déjà proposé de réaliser des faces avant techniques par moulage de matière plastique, ce qui permet d'obtenir des pièces considérablement plus légères que les faces avant techniques en tôle, et ce, sans aucune opération d'assemblage.

Toutefois, la résistance mécanique de telles faces avant techniques en matière plastique peut s'avérer insuffisante en cas d'arrachement du capot.

En outre, les dimensions relativement importantes des faces avant techniques peuvent induire des contraintes internes dans les pièces moulées, lesquelles présentent par ailleurs une faible stabilité dimensionnelle du fait des importantes dilatations thermiques de la matière plastique.

Par ailleurs, de DE-A-3 433 935, on connaît une face avant technique conforme au préambule de la revendication 1.

Une telle face avant technique comporte différentes pièces qui, pour être assemblées, requièrent des étapes de montage et de soudage relativement complexes que la présente invention permet d'éliminer.

La présente invention vise à fournir une face avant technique qui ne présente pas les inconvénients rappelés ci-dessus et qui est en outre d'un mode de réalisation particulièrement simple et économique.

La présente invention a pour objet une face avant technique de véhicule automobile comportant au moins une traverse rigide, de préférence métallique, qui s'étend sur la majeure partie de sa longueur et au moins une pièce-support en matière plastique assujettie à la traverse rigide, et apte à recevoir au moins un organe du véhicule tel qu'une optique de phare, caractérisé par le fait qu'elle comporte au moins deux pièces-supports en matière plastique et que, chaque pièce-support est surmoulée sur un tronçon d'extrémité de la traverse rigide.

On comprend que la face avant technique selon l'invention peut être fabriquée pour un prix de revient très bas du fait qu'elle est constituée par des éléments individuellement peu coûteux et faciles à assembler entre eux pour former la face avant technique selon l'invention,

En outre, de par sa structure, la face avant technique selon l'invention est particulièrement adaptée à la fonction d'accrochage de sécurité du capot.

En effet, la traverse rigide constitue une partie de la face avant technique qui est apte à supporter des efforts de flexion importants. Elle peut donc recevoir le point d'accrochage du capot tout en étant solidarisée par ses extrémités au châssis du véhicule.

La traverse rigide peut être reliée au châssis du véhicule par l'intermédiaire des pièces supports d'extrémité lesquelles sont alors uniquement soumises à des efforts de traction qu'elles sont en mesure de supporter, ou par l'intermédiaire des supports d'ailes du véhicule dans le cas où ladite traverse rigide s'étend sur toute la largeur du véhicule.

La face avant technique selon l'invention présente également l'avantage d'être peu sensible aux variations de température, la traverse rigide présentant un coefficient de dilatation voisin de celui du châssis du véhicule, mais très inférieur à celui d'une matière plastique, et les pièces supports étant suffisamment petites pour ne se dilater que dans une faible mesure.

Par ailleurs, on peut accroître la stabilité dimensionnelle des pièces supports d'extrémité en les réalisant en une matière plastique chargée de fibres, dont le prix de revient assez élevé est compensé par la relativement petite taille des pièces supports. Cette petite taille limite d'ailleurs la formation de contraintes internes susceptibles de déformer lesdites pièces supports.

Dans un mode de réalisation particulier de l'invention, la face avant technique comporte une première traverse rigide à sa partie supérieure et une seconde traverse rigide à sa partie inférieure, chacune de ces traverses rigides étant reliée aux pièces supports en matière plastique.

La présente invention a également pour objet un procédé pour réaliser une face avant technique telle que décrite ci-dessus.

Ce procédé est caractérisé par le fait que l'on dispose deux moules qui définissent chacun une pièce support apte à recevoir un organe du véhicule tel qu'une optique de phare, de manière à ce que lesdits moules se situent l'un par rapport à l'autre dans la position relative des deux pièces supports de la face avant technique à réaliser; que l'on place entre ces deux moules au moins une traverse rigide de préférence métallique dont chaque extrémité pénètre dans l'un des moules; et que l'on remplit les deux moules de matière plastique pour surmouler une pièce support sur chaque extrémité de la traverse rigide.

Le procédé selon l'invention est avantageux en ce que l'écartement des pièces supports de la face avant technique ainsi obtenue est fixée par le positionnement relatif des deux moules, et non par le positionnement axial de la traverse rigide entre ces moules.

En d'autres termes, il n'est pas nécessaire que la traverse rigide pénètre symétriquement dans les deux moules, ladite traverse rigide pouvant pénétrer davantage dans l'un des moules que dans l'autre moule.

De ce fait, la traverse rigide peut, selon l'invention, présenter une longueur peu précise, ce qui autorise de larges tolérances dimensionnelles de fabrication de cette traverse, et être placée entre les deux moules à l'aide d'un appareillage simple qui n'assure qu'un positionnement axial approximatif de ladite traverse rigide.

Avantageusement, on surmoule en même temps les deux pièces supports de manière à diminuer le temps de fabrication de la face avant technique selon l'invention.

La présente invention a également pour objet un dispositif pour mettre en oeuvre le procédé décrit ci-dessus.

Ce dispositif est caractérisé par le fait qu'il comporte deux moules qui définissent chacun une pièce support apte à recevoir un organe de véhicule tel qu'une optique de phare, les deux moules étant disposés de manière à se situer l'un par rapport à l'autre dans la position relative des deux pièces supports de la face avant technique à réaliser, chaque moule étant apte à recevoir l'extrémité d'une traverse rigide s'étendant entre les deux moules.

Dans le but de mieux faire comprendre l'invention, on va en décrire maintenant un mode de réalisation donné à titre d'exemple non limitatif en référence au dessin annexé dans lequel :
- la figure 1 est une vue en perspective d'une face avant technique selon un mode de réalisation de l'invention avec deux optiques de phare,
- les figures 2 à 6 sont des exemples de coupes transversales de traverses rigides utilisables pour réaliser une face avant technique selon l'invention,
- la figure 7 est une vue en élévation d'un dispositif permettant la réalisation de la face avant technique de la figure 1, et
- la figure 8 est une vue analogue à la figure 1 d'une face avant technique selon un autre mode de réalisation de l'invention.

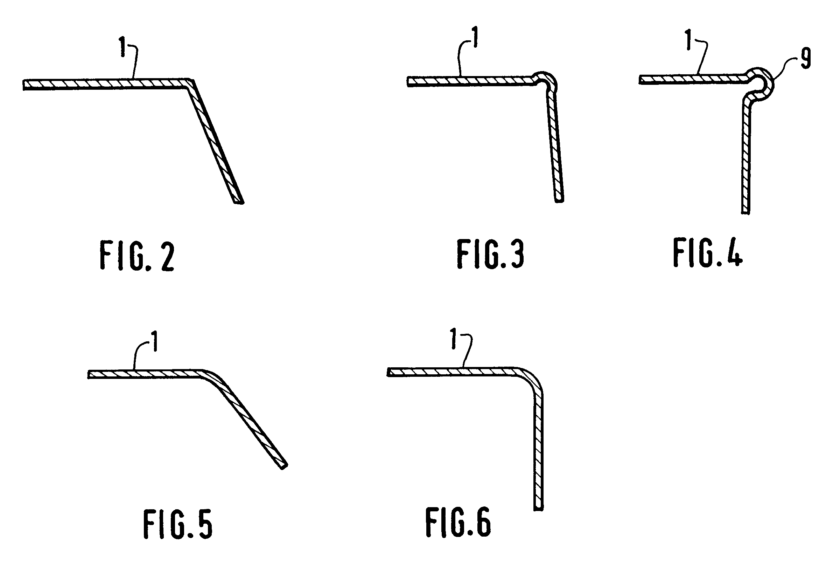

La face avant technique illustrée comporte une traverse rigide 1 réalisée en aluminium qui présente une section en L dont des exemples sont représentés sur les figures 2 à 6.

La traverse rigide 1 est surmoulée à chacune de ses extrémités par une pièce support 2 en matière plastique qui comporte un logement 3 pour recevoir une optique de phare 4.

Chaque pièce support 2 comporte en outre un logement supplémentaire 5 pour recevoir par exemple un feu clignotant.

La face avant technique illustrée est destinée à être assujettie au châssis du véhicule par des points de fixation 6 présents en partie inférieure de chaque pièce support 2.

Des pattes de fixation 7 sont également prévues en partie supérieure de chaque pièce support 2 pour solidariser ces dernières aux supports d'ailes du véhicule.

La traverse rigide 1 comporte, dans sa partie centrale, une attache 8 en matière plastique surmoulée qui est destinée à recevoir le crochet de sécurité du capot non représenté.

Sur les exemples de coupes transversales représentés aux figures 2 à 6, les figures 2, 3 et 4 correspondent à des traverses rigides extrudées.

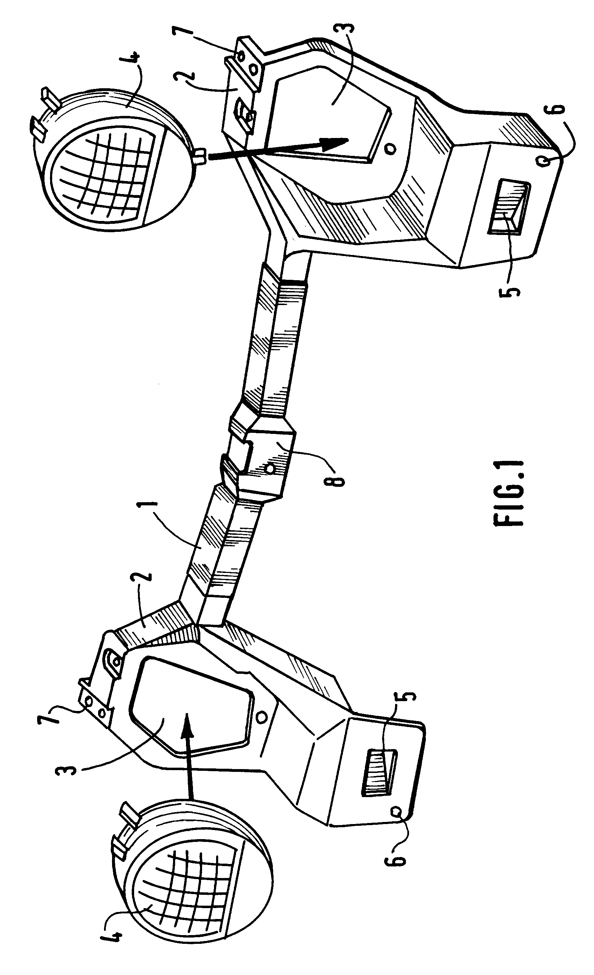

On peut noter que la traverse rigide de la figure 4 comporte sur son arête un bourrelet 9 dirigé vers l'extérieur qui permet d'arrimer le crochet de sécurité du capot directement sur la traverse rigide sans qu'il soit nécessaire de surmouler une attache en matière plastique 8 telle que celle illustrée sur la figure 1.

Les coupes des figures 5 et 6 correspondent à des traverses rigides embouties.

La structure de la face avant technique selon l'invention se prête particulièrement bien à la fonction d'accrochage de sécurité du capot.

En effet, en cas d'arrachement du capot, le crochet de sécurité de ce dernier exerce sur la traverse rigide 1 une force qui est dirigée vers le haut et qui est transmise par la traverse rigide aux pièces supports en matière plastique 2. La traverse rigide 1 subit alors un effort de flexion tandis que les pièces supports 2 ne sont sollicitées qu'en traction dans leur partie rectiligne comprise entre l'extrémité de la traverse rigide 1 et leur point d'accrochage 6 sur le châssis du véhicule.

Il en résulte une bonne tenue de la face avant technique selon l'invention à l'arrachement du capot.

A titre d'exemple de matières plastiques utilisables pour réaliser les pièces supports 2, on peut citer le polyamide, éventuellement chargé de fibres de renfort dont la fonction est de limiter la dilatation thermique de la pièce moulée et d'augmenter la tenue en température, le styrène maléique anhydride (SMA) également chargé de fibres, ou encore le poly-butyl téréphtalate (PBT).

Conformément à l'invention, il n'est pas nécessaire que le milieu de la traverse rigide 1 se situe exactement dans le plan médian de la face avant technique.

En d'autres termes, la traverse rigide 1 peut davantage pénétrer dans l'une des pièces supports 2 que dans l'autre pièce support 2.

Cette différence, qui doit toutefois être suffisamment réduite pour ne pas affecter la rigidité d'ensemble de la face avant technique selon l'invention, est compensée par la longueur de la zone de surmoulage de chaque pièce support sur la traverse rigide.

Dans ces conditions, le positionnement de la traverse rigide, lors du surmoulage des deux pièces supports 2, peut être effectué avec une précision relativement faible.

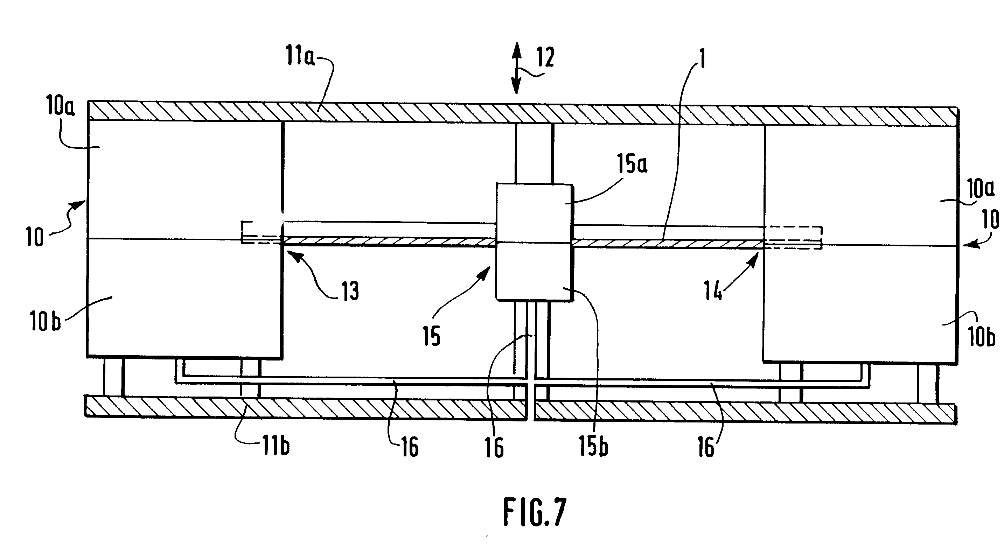

Sur la figure 7, on a représenté un dispositif permettant de réaliser la face avant technique de la figure 1.

Ce dispositif comporte deux moules d'extrémité 10 dont les cavités intérieures sont symétriques.

Chaque cavité intérieure d'un moule 10 définit une pièce support 2.

Les moules 10 sont constitués chacun de deux demi-moules 10a, 10b qui sont solidaires chacun de platines 11a, 11b.

La platine 11a est apte à se déplacer selon la direction indiquée par la double flèche 12 pour ouvrir ou refermer les moules 10.

Conformément à l'invention, l'écartement des deux moules 10 est tel que leurs cavités intérieures se situent très précisément dans la position relative des deux pièces supports 2 de la face avant technique à réaliser.

Dans ces conditions, la traverse rigide 1 peut être positionnée entre les deux moules 10 avec ses extrémités 13 et 14 pénétrant sur des longueurs inégales dans les moules 10.

En revanche, il est clair que le positionnement transversal de la traverse rigide 1 doit être réalisé avec précision.

Le dispositif illustré comporte en outre un moule central 15 qui est destiné à surmouler l'attache 8 recevant le crochet de sécurité du capot.

Ce moule central 15 est également constitué par un demi-moule 15a solidaire de la platine mobile 11a et un demi-moule 15b solidaire de la platine fixe 11b.

Des canaux d'alimentation 16 permettent d'injecter de la matière plastique dans les trois moules 10 et 15 pour surmouler simultanément les deux pièces supports 2 et l'attache de sécurité du capot 8, afin d'obtenir un cycle de fabrication de la face avant technique particulièrement court.

En variante, on pourrait prévoir un canal d'alimentation particulier pour le moule central 15, de manière à réaliser l'attache de sécurité du capot 8 en une autre matière que les deux pièces supports 2. Cette variante autoriserait néanmoins de surmouler simultanément les pièces supports et l'attache.

Dans un autre mode de réalisation non représenté, les pièces supports en matière plastique peuvent être moulées isolément puis rapportées sur la traverse rigide à laquelle elles sont solidarisées mécaniquement.

Les moyens mécaniques de solidarisation utilisables à cet effet peuvent être de tout type connu.

Dans un autre mode de réalisation non illustré, la traverse rigide s'étend jusqu'aux supports d'ailes, c'est-à-dire sur toute la largeur du véhicule.

Ce mode de réalisation présente l'avantage de permettre la fixation directe de la traverse rigide sur les supports d'ailes.

Toutefois, dans l'hypothèse où la traverse rigide est réalisée en un matériau relativement coûteux, il peut être préférable, comme dans le mode de réalisation illustré sur le dessin, de limiter la longueur de ladite traverse rigide pour réduire le prix de revient de la face avant technique selon l'invention.

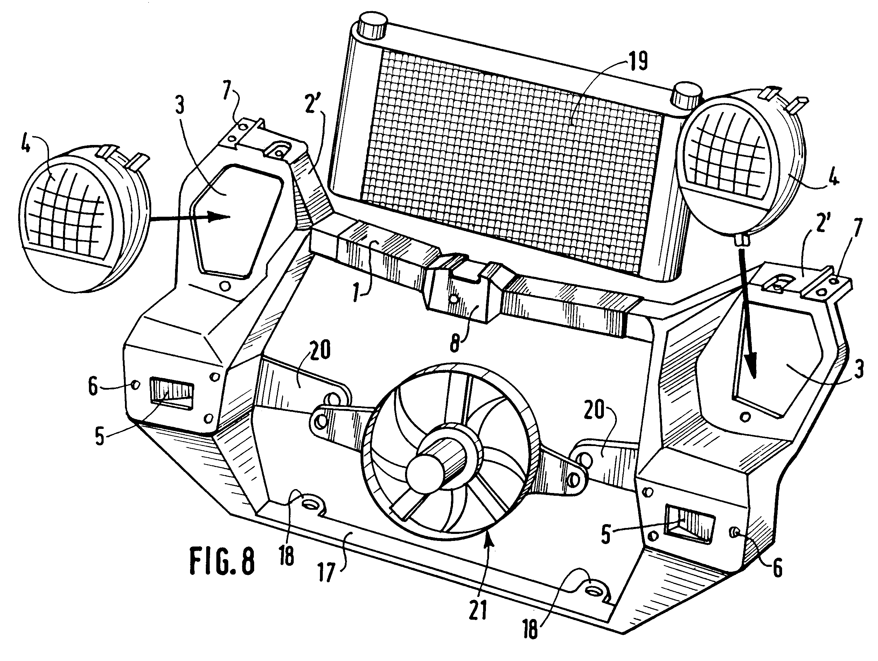

La figure 8 représente un autre mode de réalisation de l'invention dans lequel les pièces supports 2' de la face avant technique se prolongent en partie inférieure où elles sont assujetties à une seconde traverse rigide 17.

L'intérêt d'un tel mode de réalisation réside dans le fait que la face avant technique présente une rigidité d'ensemble accrue.

Des pattes de fixation 18 sont prévues sur la traverse rigide 17 pour recevoir la partie inférieure d'un radiateur 19 dont la partie supérieure est destinée à être fixée à la traverse rigide supérieure 1.

Les pièces supports 2' comportent en outre des pattes 20 aptes à supporter un ventilateur 21 situé devant le radiateur 19.

Conformément à l'invention, le positionnement relatif des deux pièces supports 2' est assuré de préférence par surmoulage simultané des pièces supports 2' sur les traverses rigides 1 et 17.

Dans un autre mode de réalisation non représenté, l'une des pièces supports inclut une serrure destinée à servir de point d'accrochage du capot tandis que l'autre pièce support inclut le crochet de sécurité du capot. La serrure et le crochet de sécurité peuvent avantageusement être surmoulés dans chaque pièce support.

Il est bien entendu que les modes de réalisation qui viennent d'être décrits ne présentent aucun caractère limitatif et qu'ils pourront recevoir toutes modifications désirables sans sortir pour cela du cadre de l'invention.

## Revendications

1. Face avant technique de véhicule automobile, comportant au moins une traverse rigide (1,17) qui s'étend sur la majeure partie de sa longueur et au moins une pièce-support (2,2') en matière plastique assujettie à la traverse rigide (1,17), et apte à recevoir au moins un organe du véhicule tel qu'une optique de phare (4), caractérisée par le fait qu'elle comporte au moins deux pièces-supports en matière plastique et que chaque pièce support (2,2') est surmoulée sur un tronçon d'extrémité (13,14) de la traverse rigide (1).

2. Face avant technique selon la revendication 1, caractérisée par le fait que la traverse rigide (1) comporte dans sa partie centrale une attache (8,9) pour recevoir le crochet de sécurité du capot.

3. Face avant technique selon la revendication 2, caractérisée par le fait que l'attache (8) est réalisée par surmoulage de matière plastique.

4. Face avant technique selon la revendication 2, caractérisée par le fait que l'attache est constituée par un bourrelet (9) dirigé vers l'extérieur réalisé directement sur la traverse rigide (1).

5. Face avant technique selon l'une quelconque des revendications 1 à 4, caractérisée par le fait qu'elle comporte une seconde traverse rigide (17) à sa partie inférieure.

6. Procédé pour réaliser une face avant technique d'automobile selon l'une quelconque des revendications 1 à 5, caractérisé par le fait que l'on dispose deux moules (10) de préférence symétriques qui définissent chacun une pièce support (2,2') apte à recevoir un organe du véhicule tel qu'une optique de phare (4), de manière à ce que lesdits moules se situent l'un par rapport à l'autre dans la position relative des deux pièces supports (2,2') de la face avant technique à réaliser; que l'on place entre ces deux moules (10) au moins une traverse rigide (1,17) dont chaque extrémité (13,14) pénètre dans l'un des moules (10); et que l'on remplit les deux moules (10) de matière plastique pour surmouler une pièce support (2,2') sur chaque extrémité (13,14) de la traverse rigide (1,17).

7. Procédé selon la revendication 6, caractérisé par le fait que l'on dispose un troisième moule (15) autour de la partie centrale de la traverse rigide (1) pour surmouler une attache (8) de sécurité pour le capot du véhicule.

8. Dispositif pour la mise en oeuvre du procédé selon l'une quelconque des revendications 6 et 7, caractérisé par le fait qu'il comporte deux moules (10) de préférence symétriques qui définissent chacun une pièce support (2,2') apte à recevoir un organe du véhicule tel qu'une optique de phare (4), les deux moules (10) étant disposés de manière à se situer l'un par rapport à l'autre dans la position relative des deux pièces supports (2,2') de la face avant technique à réaliser, chaque moule (10) étant apte à recevoir l'extrémité (13,14) d'une traverse rigide (1,17) s'étendant entre les deux moules (10).

9. Dispositif selon la revendication 8, caractérisé par le fait qu'il comporte en outre un troisième moule (15) situé entre les deux premiers moules (10) et définissant une attache (8) pour accrocher le capot du véhicule, ce troisième moule (15) étant apte à entourer une région centrale d'une traverse rigide (1) s'étendant entre les deux premiers moules (10).

## Claims

1. Motor vehicle front end comprising at least one rigid crossmember (1, 17) which extends over most of its length and at least one support piece (2, 2') made of plastic secured to the rigid crossmember (1, 17) and capable of accommodating at least one component of the vehicle such as a headlamp unit (4), characterized in that it comprises at least two support pieces made of plastic and that each support piece (2, 2') is over-moulded onto an end portion (13, 14) of the rigid cross-member (1).

2. Front end according to Claim 1, characterized in that the rigid crossmember (1) in its central part comprises a fastener (8, 9) for accommodating the bonnet safety catch.

3. Front end according to Claim 2, characterized in that the fastener (8) is made by overmoulding plastic.

4. Front end according to Claim 2, characterized in that the fastener consists of an outwardly pointing roll (9) made directly on the rigid crossmember (1).

5. Front end according to any one of Claims 1 to 4, characterized in that it comprises a second rigid cross-member (17) at its lower part.

6. Method for producing a vehicle front end according to any one of Claims 1 to 5, characterized in that two, preferably symmetric, moulds (10), each of which defines one support piece (2, 2') capable of accommodating a component of the vehicle such as a headlamp unit (4), are arranged in such a way that the said moulds are situated one with respect to the other in the relative position of the two support pieces (2, 2') of the front end to be produced; that at least one rigid crossmember (1, 17) is placed between these two moulds (10) with each end (13, 14) of the crossmember penetrating one of the moulds (10); and that the two moulds (10) are filled with plastic so as to overmould a support piece (2, 2') on each end (13, 14) of the rigid crossmember (1, 17).

7. Method according to Claim 6, characterized in that a third mould (15) is arranged around the central part of the rigid crossmember (1) in order to overmould a safety fastener (8) for the bonnet of the vehicle.

8. Device for the implementation of the method according to either one of Claims 6 and 7, characterized in that it comprises two, preferably symmetric, moulds (10), each of which defines a support piece (2, 2') capable of accommodating a component of the vehicle such as a headlamp unit (4), the two moulds (10) being arranged in such a way as to be situated one with respect to the other in the relative position of the two support pieces (2, 2') of the front end to be produced, it being possible for each mould (10) to accommodate the end (13, 14) of a rigid crossmember (1, 17) extending between the two moulds (10).

9. Device according to Claim 8, characterized in that it further comprises a third mould (15) situated between the first two moulds (10) and defining a fastener (8) for fastening down the bonnet of the vehicle, this third mould (15) being capable of surrounding a central region of a rigid crossmember (1) extending between the first two moulds (10).

## Patentansprüche

1. Vorderfrontteil eines Kraftfahrzeugs mit mindestens einer steifen Traverse (1, 17), die sich über den Hauptteil der Länge der Vorderfrontteil erstreckt und mit mindestens einem Stützteil (2, 2') aus Kunststoff, das an der steifen Traverse (1, 17) befestigt ist und ausgebildet ist für die Aufnahme mindestens eines Organs des Kraftfahrzeugs, wie z.B. die Optik eines Scheinwerfers (4), dadurch gekennzeichnet, dass das Vorderfrontteil mindestens zwei Stützteile aus Kunststoff aufweist und dass jedes Stützteil (2, 2') angegossen ist an einem Endbereich (13, 14) der steifen Traverse (1).

2. Vorderfrontteil nach Anspruch 1, dadurch gekennzeichnet, dass die steife Traverse (1) in ihrem Mittelbereich eine Lasche (8, 9) für die Aufnahme eines Sicherheitshakens der Haube aufweist.

3. Vorderfrontteil nach Anspruch 2, dadurch gekennzeichnet, dass die Lasche (8) realisiert ist durch Anspritzen von Kunststoff.

4. Vorderfrontteil nach Anspruch 2, dadurch gekennzeichnet, dass die Lasche gebildet ist von einer Verdickung (9), die nach außen gerichtet ist und unmittelbar an der steifen Traverse (1) ausgebildet ist.

5. Vorderfrontteil nach einem der Ansprüche 1 bis 4, dadurch gekennzeichnet, dass es eine zweite steife Traverse (17) in seinem unteren Bereich aufweist.

6. Verfahren zum Herstellen eines Vorderfrontteils eines Kraftfahrzeugs nach einem der Ansprüche 1 bis 5, dadurch gekennzeichnet, dass zwei Formen (10) vorgesehen werden, die vorzugsweise symmetrisch sind und die jeweils ein Stützteil (2, 2') begrenzen, das geeignet ist für die Aufnahme eines Organs des Fahrzeugs wie beispielsweise der Optik eines Scheinwerfers (4), dergestalt dass die beiden genannten Formen sich in bezug aufeinander in der Relativposition der beiden Stützteile (2, 2') des zu realisierenden Vorderfrontteils befinden; dass man zwischen diesen beiden Formen (10) mindestens eine steife Traverse (1, 17) anordnet, von der jeder Endbereich (13, 14) in eine der Formen (10) hineinragt; und dass man die beiden Formen (10) mit Kunststoff ausfüllt, um ein Stützteil (2, 2') an jedem Endbereich (13, 14) der steifen Traverse (1, 17) anzuspritzen.

7. Verfahren nach Anspruch 6, dadurch gekennzeichnet, dass man eine dritte Form (15) um den Mittelbereich der steifen Traverse (1) vorsieht, um eine Sicherheitslasche (8) für eine Haube des Kraftfahrzeugs anzuspritzen.

8. Vorrichtung zur Durchführung des Verfahrens nach einem der Ansprüche 6 und 7, dadurch gekennzeichnet, dass sie zwei Formen (10) aufweist, die vorzugsweise symmetrisch sind und die jeweils ein Stützteil (2, 2') definieren, dass für die Aufnahme eines Organs des Kraftfahrzeugs geeignet ist, wie beispielsweise die Optik eines Scheinwerfers (4), dass die beiden Formen (10) so angeordnet sind, das sie in bezug aufeinander sich in einer Position befinden, die die beiden Stützteile (2, 2') des zu realisierenden Vorderfrontteils haben, und dass jede Form (10) so ausgebildet ist, dass sie einen Endbereich (13, 14) einer steifen Traverse (1, 17) aufnimmt, die sich zwischen den beiden Formen (10) erstreckt.

9. Vorrichtung nach Anspruch 8, dadurch gekennzeichnet, dass sie zudem eine dritte Form (15) aufweist, die zwischen den beiden ersten Formen (10) angeordnet ist und eine Lasche (8) für das Unterhaken einer Haube des Kraftfahrzeugs definiert, und dass diese dritte Form (15) ausgelegt ist, den mittleren Bereich der steifen Traverse (1), die sich zwischen den beiden ersten Formen (10) erstreckt, zu umschließen.
